# EUROPEAN PATENT APPLICATION

(11) **EP 1 604 779 A1**
(43) Date of publication of application: **14.12.2005**
(21) Application number: 05012140.9
(22) Date of filing: 06.06.2005
(51) Int. Cl.: B24B 13/005, C08L 1/00, B23Q 3/08

(54) **Fusion/coagulation work fixing agent and machining method using the same**

(30) Priority: 08.06.2004 JP 2004169896; 16.07.2004 JP 2004209720; 08.02.2005 JP 2005031977
(71) Applicant: DENSO CORPORATION, Kariya-city, Aichi-pref. 488-8661 (JP)
(72) Inventor: Kanada, Kenso, Kariya-city Aichi-pref. 448-8661 (JP); Ikai, Kazuhiko, Kariya-city Aichi-pref. 448-8661 (JP); Takeuchi, Yukihisa, Kariya-city Aichi-pref. 448-8661 (JP); Suzuki, Kazunori, Kariya-city Aichi-pref. 448-8661 (JP)
(74) Representative: Klingseisen, Franz

(57) **Abstract**

A fusion/coagulation work fixing agent and a machining method are disclosed. The workability of the machining method is improved using the fusion/coagulation work fixing agent (3) which utilizes the fusion and coagulation of itself to fix a work (1). The difference between the fusion start temperature and the fusion end temperature of the fusion/coagulation work fixing agent (3) is not more than 2 °C.

## Description

### BACKGROUND OF THE INVENTION

### 1. Field of the Invention

The present invention relates to a fusion/coagulation work fixing agent for fixing a work using the fusion and the coagulation of the agent itself, and a machining method using the fixing agent.

This invention also relates to a work fixing table, a work fixing method and a machining method or, in particular, to a work fixing table, a work fixing method and a machining method preferably used for the precision machining of a thin work.

### 2. Description of the Related Art

The fusion/coagulation work fixing agent of this kind is effectively used for fixing and cutting or otherwise machining a work of a material such as stainless steel, non-iron metal or ceramics for which a magnetic work-fixing method cannot be used, or especially, a thin sheet or a fragile work low in strength.

Japanese Unexamined Patent Publication No. 11-198014 (Patent Document 1) discloses a machining method in which the fusion/coagulation work fixing agent made of a thermoplastic resin such as paraffin is melted by being heated, and a work (plastic lens) is advanced into the work fixing agent thus melted. Next, the work fixing agent is coagulated by being cooled. The work thus fixed on a fixing table through the work fixing agent is machined. After being machined, the work is removed from the fixing table by heating and melting the work fixing agent with hot water or hot air.

A detailed study by the inventor, etc. of a conventional machining method using the fusion/coagulation work fixing agent to fix the work shows that the slow behavior of fusion and coagulation of the fixing agent is a great factor contributing to a low workability of the machining operation.

Specifically, paraffin used in the conventional method is generally a mixture of several substances and therefore considerably low in purity. Therefore, the differences between the fusion start temperature and the fusion end temperature and between the coagulation start temperature and the coagulation end temperature of the conventional paraffin fixing agent have values as large as more than 10 °C.

As described above, the work fixing agent behaves very slowly with a large temperature difference from the start to end of fusion and coagulation. This lengthens the time required from coagulation start to coagulation end during which the work fixing agent is coagulated by being cooled to fix the work. In similar fashion, when the work fixing agent is melted by being heated to remove the work, the time required from the fusion start to the fusion end is lengthened. As a result, the workability of the machining operation is inconveniently reduced.

In the prior art, a tacking adhesive is available as a fixing agent to provisionally fix an object to be machined (work) on a fixing table when the work is machined (Japanese Unexamined Patent Publication No. 7-224270; Patent Document 2).

The work provisionally fixed on the fixing table is machined and after machining, the work can be easily removed from the fixing table by applying hot water to the work and the fixing table and thus melting the adhesive.

According to the prior art described, however, even in the case where the fixing agent in fluid state is coated on the fixing table, a bonding layer several µm thick is formed in the boundary between the fixing table and the work, which poses a stumbling block to maintaining a constant parallelism of the work with respect to the fixing table. In the conventional work fixing method, therefore, precision machining is difficult.

### SUMMARY OF THE INVENTION

In view of the situation described above, an object of this invention is to improve the workability of the machining method using a fusion/coagulation work fixing agent.

Another object of the invention is to provide a work fixing table, a work fixing method and a machining method using the work fixing table in which the thickness of the fixing agent in the boundary between the work and the work fixing table is eliminated thereby to secure a high parallelism after machining the work.

In order to achieve the objects described above, according to a first aspect of the invention, there is provided a fusion/coagulation work fixing agent for fixing the work utilizing the fusion and coagulation of the agent itself, wherein the difference between the fusion start temperature and the fusion end temperature is not more than 2 °C.

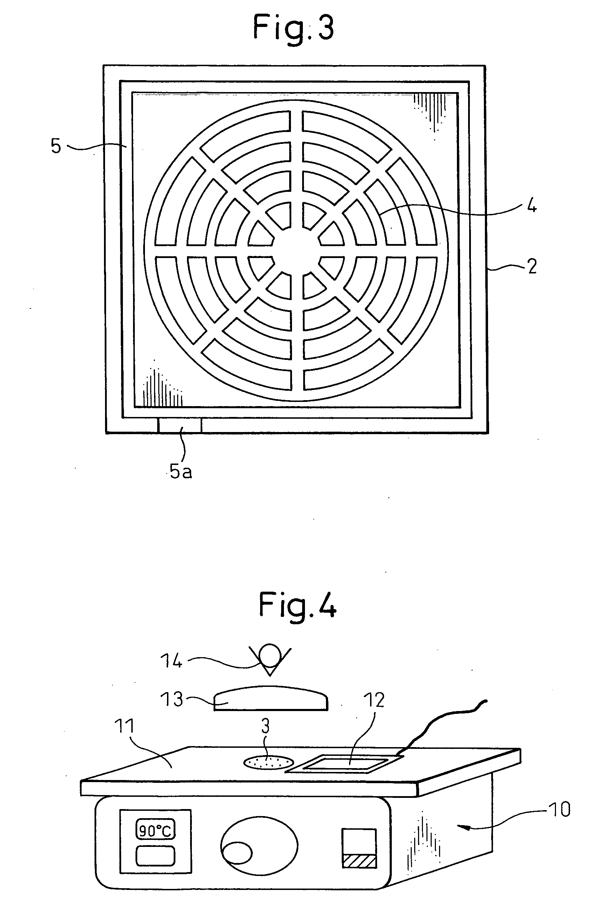

A method of measuring the melting point of the work fixing agent is explained. Fig. 4 shows a melting point measuring instrument, in which an electric heater 10 capable of adjusting the heating speed heats a heating table 11 placed on the upper surface thereof. The heating table 11 is formed of a tabular metal and has a tabular surface formed with a heat-resistant ceramic coating layer.

A thermocouple 12, which is a means for detecting the temperature of the heating table 11, is small in heat capacity and therefore fast in heat response. The thermocouple 12 is attached in proximity to the work fixing agent 3 on the surface of the heating table 11. Numeral 13 designates a magnifier to view the state of the fixing agent 3 in magnified form, and numeral 14 an operator visually observing the work.

First, before formally measuring the fusion start temperature of the work fixing agent 3, a very small amount, say, 0.05 to 0.06 grams of the fixing agent 3 sampled from the case is placed and melted by being heated on the heating table 11. Immediately after that, the temperature of the heating table 11 is again returned to about room temperature to solidify the work fixing agent 3. By doing so, the heat of the heating table 11 is easily transmitted to the work fixing agent 3.

The wording "returned to about room temperature" may be understood to return the temperature to a slightly higher temperature (30 °C) than room temperature (25 °C). Even in the case where the fusion start temperature is measured after the temperature is returned to a temperature (30 °C) slightly higher than room temperature in this way, the fusion start temperature unique to the work fixing agent 3 remains unchanged.

After that, the measurement of the melting point of the work fixing agent 3 is started formally in the following manner. Specifically, the heating table 11 is heated at a predetermined rate, say, 5 °C a minute, and it is confirmed visually, with the magnifier 13, that the work fixing agent 3 begins to melt partially and to change in color from white to transparent. The temperature at which the color of the fixing agent 3 begins to change from white to transparent is input to and, stored in, a personal computer not shown. This temperature is determined as the first fusion start temperature of the work fixing agent 3.

The work fixing agent 3 continues to be further heated, and it is confirmed by visual observation, also using the magnifier 13 that the work fixing agent 3 has become transparent in its entirety and has completely melted, and the temperature at which the entire work fixing agent 3 has become transparent is input to, and stored in, a personal computer not shown. This temperature is determined as the first fusion end temperature of the work fixing agent 3.

Next, after returning the heating table 11 to about room temperature again, it is heated again at the predetermined rate of 5 °C a minute in exactly the same manner. Then, the second fusion start temperature and the second fusion end temperature are measured. This process is repeated a predetermined number of times, say, five times, and the average value of the five measurements is determined as the fusion start temperature and the fusion end temperature, respectively, of the work fixing agent 3. According to this invention, the melting point is defined as this fusion start temperature.

Incidentally, the temperature at which the work fixing agent, completely melted into liquid state, is cooled and begins to coagulate is defined as the coagulation start temperature, and the temperature at which the work fixing agent is completely coagulated is defined as the coagulation end temperature. The coagulation start temperature is substantially the same as the fusion end temperature, and the coagulation end temperature substantially the same as the fusion start temperature. In the case where the difference between the fusion start temperature and the fusion end temperature of the work fixing agent is not more than 2 °C, therefore, the difference between the coagulation start temperature and the coagulation end temperature is also not more than 2 °C.

The work fixing agent of which the difference between the fusion start temperature and the fusion end temperature is not more than 2 °C as described above can be specifically obtained by improving the purity of paraffin or polyethylene glycol according to a third aspect of the invention.

The work fixing agent in which the purity of normal paraffin (C₁₆H₃₄) of carbon number 16 is improved to at least 99 % (by weight percent, as in all the following cases), for example, has the fusion start temperature of 18 °C and the fusion end temperature of 18.7 °C. Therefore, the difference between the fusion start temperature and the fusion end temperature can be set to as small as 0.7 °C.

Also, the work fixing agent composed of 91 % normal paraffin of carbon number 18, 6.7 % normal paraffin of carbon number 17 and 2.3 % normal paraffin of carbon number 19, in which normal paraffin purity is improved to 99.3 %, has the fusion start temperature of 22.5 °C and the fusion end temperature of 22.8 °C. Thus, the difference between the fusion start temperature and the fusion end temperature can be set to a value as small as 0.3 °C.

Polyethylene glycol having the average molecular weight of 1540 has the fusion start temperature of 46 °C and the fusion end temperature of 47.2 °C. The difference between the fusion start temperature and the fusion end temperature can be set to a very small 1.2 °C.

According to a third aspect of the invention, paraffin composed of a combination of normal paraffins and non-normal paraffins shown in (1) to (5) below can also be used. The component ratio is indicated by weight percent in all cases.

### (1) Paraffin composed of 88.99 % normal paraffins and the remaining non-normal paraffins

### [Composition of normal paraffins]

Normal paraffin of carbon number 18: 0.08 %
Normal paraffin of carbon number 19: 0.41 %
Normal paraffin of carbon number 20: 1.76 %
Normal paraffin of carbon number 21: 5.61 %
Normal paraffin of carbon number 22: 10.66 %
Normal paraffin of carbon number 23: 14.76 %
Normal paraffin of carbon number 24: 14.50 %
Normal paraffin of carbon number 25: 12.42 %
Normal paraffin of carbon number 26: 9.08 %
Normal paraffin of carbon number 27: 6.58 %
Normal paraffin of carbon number 28: 4.04 %
Normal paraffin of carbon number 29: 2.88 %
Normal paraffin of carbon number 30: 2.09 %
Normal paraffin of carbon number 31: 1.50 %
Normal paraffin of carbon number 32: 1.02 %
Normal paraffin of carbon number 33: 0.72 %
Normal paraffin of carbon number 34: 0.37 %
Normal paraffin of carbon number 35: 0.24 %
Normal paraffin of carbon number 36: 0.14 %
Normal paraffin of carbon number 37: 0.08 %
Normal paraffin of carbon number 38: 0.05 %

The total composition of normal paraffins is 88.99 %, and the remaining composition is non-normal paraffins.

The average carbon number of the paraffin having this composition (1) is 24.74, and the standard deviation of the molecular weight distribution is 2.86. The smaller the standard deviation, the sharper the molecular weight distribution. Also, the maximum molecular weight of the paraffin having the composition (1) is 534 and the minimum molecular weight thereof 254. Therefore, the molecular weight distribution width is 280.

The fusion start temperature of the paraffin having the composition (1) is 50.4 °C, and the fusion end temperature thereof is 51.7 °C. Thus, the difference between the fusion start temperature and the fusion end temperature can be set to a value as small as 1.3 °C.

### (2) Paraffin composed of 88.64 % normal paraffins and the remaining non-normal paraffins

### [Composition of normal paraffins]

Normal paraffin of carbon number 18: 0.07 %
Normal paraffin of carbon number 19: 0.28 %
Normal paraffin of carbon number 20: 1.10 %
Normal paraffin of carbon number 21: 3.38 %
Normal paraffin of carbon number 22: 6.92 %
Normal paraffin of carbon number 23: 10.86 %
Normal paraffin of carbon number 24: 12.67 %
Normal paraffin of carbon number 25: 12.74 %
Normal paraffin of carbon number 26: 11.17 %
Normal paraffin of carbon number 27: 9.18 %
Normal paraffin of carbon number 28: 6.43 %
Normal paraffin of carbon number 29: 4.73 %
Normal paraffin of carbon number 30: 3.01 %
Normal paraffin of carbon number 31: 2.16 %
Normal paraffin of carbon number 32: 1.42 %
Normal paraffin of carbon number 33: 0.98 %
Normal paraffin of carbon number 34: 0.55 %
Normal paraffin of carbon number 35: 0.36 %
Normal paraffin of carbon number 36: 0.22 %
Normal paraffin of carbon number 37: 0.15 %
Normal paraffin of carbon number 38: 0.11 %
Normal paraffin of carbon number 39: 0.09 %
Normal paraffin of carbon number 40: 0.06 %

The total composition of these normal paraffins is 88.64 %, and the remaining composition is non-normal paraffin.

The average carbon number of the paraffin having this composition (2) is 25.61, and the standard deviation of the molecular weight distribution is 3.05. Also, the maximum molecular weight is 562 and the minimum molecular weight 254. Therefore, the molecular weight distribution width is 366. The fusion start temperature of the paraffin having the composition (2) is 52.5 °C, and the fusion end temperature is 53.7 °C. Thus, the difference between the fusion start temperature and the fusion end temperature can be set to a value as small as 1.2 °C.

### (3) Paraffin composed of 89.57 % normal paraffins and the remaining non-normal paraffins

### [Composition of normal paraffins]

Normal paraffin of carbon number 19: 0.09 %
Normal paraffin of carbon number 20: 0.34 %
Normal paraffin of carbon number 21: 1.31 %
Normal paraffin of carbon number 22: 3.50 %
Normal paraffin of carbon number 23: 7.09 %
Normal paraffin of carbon number 24: 10.36 %
Normal paraffin of carbon number 25: 12.57 %
Normal paraffin of carbon number 26: 12.68 %
Normal paraffin of carbon number 27: 11.75 %
Normal paraffin of carbon number 28: 8.80 %
Normal paraffin of carbon number 29: 6.99 %
Normal paraffin of carbon number 30: 4.74 %
Normal paraffin of carbon number 31: 3.41 %
Normal paraffin of carbon number 32: 2.42 %
Normal paraffin of carbon number 33: 1.70 %
Normal paraffin of carbon number 34: 0.93 %
Normal paraffin of carbon number 35: 0.54 %
Normal paraffin of carbon number 36: 0.25 %
Normal paraffin of carbon number 37: 0.10 %

The total composition of these normal paraffins is 89.57 %, and the remaining composition is non-normal paraffin.

The average carbon number of the paraffin having this composition (3) is 26.56, and the standard deviation of the molecular weight distribution is 2.94. Also, the maximum molecular weight is 520 and the minimum molecular weight 268. Therefore, the molecular weight distribution width is 252. The fusion start temperature of the paraffin having the composition (3) is 54.6 °C, and the fusion end temperature is 55.6 °C. Thus, the difference between the fusion start temperature and the fusion end temperature can be set to a value as small as 1.0 °C.

### (4) Paraffin composed of 71.11 % normal paraffins and the remaining non-normal paraffins

### [Composition of normal paraffins]

Normal paraffin of carbon number 23: 0.08 %
Normal paraffin of carbon number 24: 0.16 %
Normal paraffin of carbon number 25: 0.39 %
Normal paraffin of carbon number 26: 0.87 %
Normal paraffin of carbon number 27: 1.52 %
Normal paraffin of carbon number 28: 1.99 %
Normal paraffin of carbon number 29: 2.68 %
Normal paraffin of carbon number 30: 3.14 %
Normal paraffin of carbon number 31: 3.71 %
Normal paraffin of carbon number 32: 3.94 %
Normal paraffin of carbon number 33: 4.07 %
Normal paraffin of carbon number 34: 4.37 %
Normal paraffin of carbon number 35: 4.94 %
Normal paraffin of carbon number 36: 5.49 %
Normal paraffin of carbon number 37: 6.00 %
Normal paraffin of carbon number 38: 5.44 %
Normal paraffin of carbon number 39: 4.50 %
Normal paraffin of carbon number 40: 3.71 %
Normal paraffin of carbon number 41: 3.01 %
Normal paraffin of carbon number 42: 2.53 %
Normal paraffin of carbon number 43: 1.94 %
Normal paraffin of carbon number 44: 1.55 %
Normal paraffin of carbon number 45: 1.06 %
Normal paraffin of carbon number 46: 0.84 %
Normal paraffin of carbon number 47: 0.58 %
Normal paraffin of carbon number 48: 0.45 %
Normal paraffin of carbon number 49: 0.33 %
Normal paraffin of carbon number 50: 0.32 %
Normal paraffin of carbon number 51: 0.26 %
Normal paraffin of carbon number 52: 0.21 %
Normal paraffin of carbon number 53: 0.19 %
Normal paraffin of carbon number 54: 0.17 %
Normal paraffin of carbon number 55: 0.15 %
Normal paraffin of carbon number 56: 0.13 %
Normal paraffin of carbon number 57: 0.11 %
Normal paraffin of carbon number 58: 0.09 %
Normal paraffin of carbon number 59: 0.08 %
Normal paraffin of carbon number 60: 0.06 %
Normal paraffin of carbon number 61: 0.05 %

The total composition of these normal paraffins is 71.11 %, and the remaining composition is non-normal paraffin.

The average carbon number of the paraffin having this composition (4) is 36.34, and the standard deviation of the molecular weight distribution is 5.70. Also, the maximum molecular weight is 856 and the minimum molecular weight 324. Therefore, the molecular weight distribution width is 532. The fusion start temperature of the paraffin having the composition (4) is 72.1 °C, and the fusion end temperature is 73.4 °C. Thus, the difference between the fusion start temperature and the fusion end temperature can be set to a value as small as 1.3 °C.

### (5) Paraffin composed of 75.78 % normal paraffins and the remaining non-normal paraffins

### [Composition of normal paraffin]

Normal paraffin of carbon number 29: 0.08 %
Normal paraffin of carbon number 30: 0.23 %
Normal paraffin of carbon number 31: 0.69 %
Normal paraffin of carbon number 32: 1.36 %
Normal paraffin of carbon number 33: 1.77 %
Normal paraffin of carbon number 34: 2.02 %
Normal paraffin of carbon number 35: 2.21 %
Normal paraffin of carbon number 36: 2.41 %
Normal paraffin of carbon number 37: 3.02 %
Normal paraffin of carbon number 38: 3.58 %
Normal paraffin of carbon number 39: 3.52 %
Normal paraffin of carbon number 40: 3.94 %
Normal paraffin of carbon number 41: 4.13 %
Normal paraffin of carbon number 42: 5.15 %
Normal paraffin of carbon number 43: 4.95 %
Normal paraffin of carbon number 44: 5.54 %
Normal paraffin of carbon number 45: 4.55 %
Normal paraffin of carbon number 46: 4.71 %
Normal paraffin of carbon number 47: 3.53 %
Normal paraffin of carbon number 48: 3.08 %
Normal paraffin of carbon number 49: 2.38 %
Normal paraffin of carbon number 50: 2.16 %
Normal paraffin of carbon number 51: 1.68 %
Normal paraffin of carbon number 52: 1.35 %
Normal paraffin of carbon number 53: 1.21 %
Normal paraffin of carbon number 54: 1.00 %
Normal paraffin of carbon number 55: 0.85 %
Normal paraffin of carbon number 56: 0.80 %
Normal paraffin of carbon number 57: 0.63 %
Normal paraffin of carbon number 58: 0.59 %
Normal paraffin of carbon number 59: 0.49 %
Normal paraffin of carbon number 60: 0.41 %
Normal paraffin of carbon number 61: 0.34 %
Normal paraffin of carbon number 62: 0.38 %
Normal paraffin of carbon number 63: 0.36 %
Normal paraffin of carbon number 64: 0.30 %
Normal paraffin of carbon number 65: 0.23 %
Normal paraffin of carbon number 66: 0.15 %

The total composition of these normal paraffins is 75.78 %, and the remaining composition is non-normal paraffin.

The average carbon number of the paraffin having this composition (5) is 43.69, and the standard deviation of the molecular weight distribution is 6.81. Also, the maximum molecular weight is 926 and the minimum molecular weight 408. Therefore, the molecular weight distribution width is 518. The fusion start temperature of the paraffin having the composition (5) is 86.2 °C, and the fusion end temperature is 87.9 °C. Thus, the difference between the fusion start temperature and the fusion end temperature can be set to a value as small as 1.7 °C.

Also, according to the third aspect, an example of the substance that can be used as polyethylene glycol has an average molecular weight of 1540, the fusion start temperature of 46 °C and the fusion end temperature of 47.2 °C. Thus, the difference between the fusion start temperature and the fusion end temperature can be set to a value as small as 1.2 °C.

Polyethylene glycol having the average molecular weight of 4,000 has the maximum molecular weight of 5464 and the minimum molecular weight of 1689, the number-average molecular weight Mn of 2866, the weight-average molecular weight Mw of 2935, the Z-average molecular weight Mz of 3004 and degree of dispersion of the molecular weight distribution (the nearer to a value 1, the sharper the distribution) Mw/Mn of 1.0238, Mz/Mw of 1.0237. This polyethylene glycol having the average molecular weight of 4000 has the fusion start temperature of 55.1 °C and the fusion end temperature of 56.4 °C. Thus, the difference between the fusion start temperature and the fusion end temperature can be set to a value as small as 1.3 °C.

As described above, the work fixing agent in which the difference between the fusion start temperature and the fusion end temperature is not more than 2 °C is used. In fixing the work by cooling and coagulating the work fixing agent in liquid state and in removing the work by heating and melting the work fixing agent coagulated in solid state, therefore, the work fixing agent may be heated or cooled only to a degree corresponding to the small temperature change of about 2 °C.

As a result, the job of fixing and removing the work can be conducted efficiently within a short time. Also, since the amount of temperature change to heat and cool the work fixing agent is very small, the work undergoes so small a change by thermal expansion that the machining accuracy of the work is improved while at the same time reducing the thermal stress on the work in view of material quality thereof thereby to suppress the material quality deterioration.

The larger the difference between the fusion start temperature of a work fixing agent and the bonding surface temperature, the larger the bonding strength of the work fixing agent. For all of the paraffins having the compositions (1) to (5), described above, which have a comparatively high fusion start temperature range of not lower than 50 °C, therefore, the bonding strength can be improved by increasing the difference between the fusion start temperature of the work fixing agent and the bonding surface temperature.

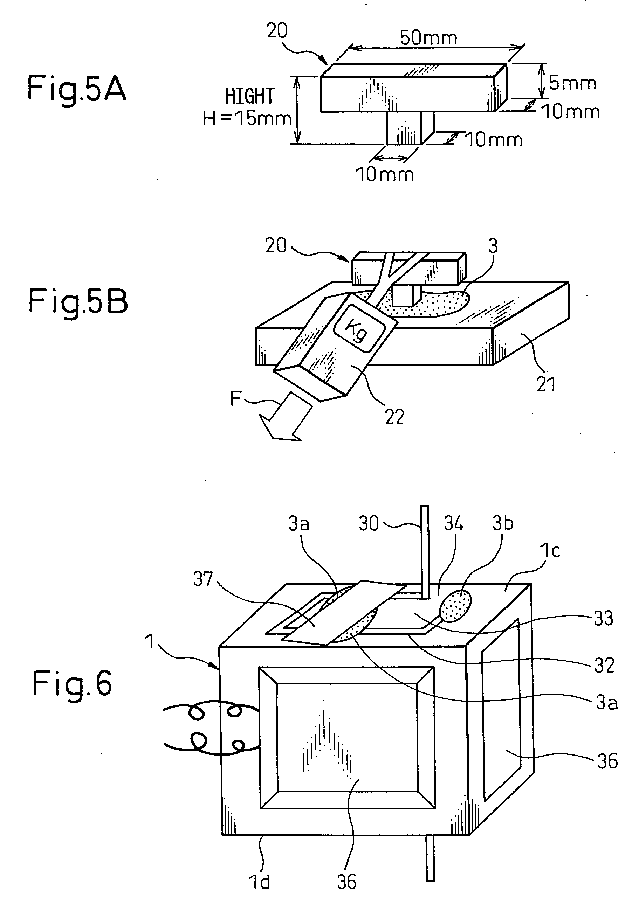

A method of measuring the bonding strength of the work fixing agent is explained specifically with reference to Fig. 5. Fig. 5A shows a T-shaped test piece 20 corresponding to the work to be fixed. The material of this T-shaped test piece is JIS(Japanese Industrial Standard)-SUS304 having the surface roughness of 4.0 Rz. Also, the size of the T-shaped test piece is shown in Fig. 5A.

Fig. 5B shows an outline of the tension test method to measure the bonding strength of the work fixing agent 3. This test method uses a work fixing agent 3 of paraffin (paraffin having the composition (4) above) having the fusion start temperature of 72.1 °C, and the fusion end temperature of 73.4 °C. The material of the fixing table 21 is JIS-SUS440 and the surface roughness thereof is 3.0 Rz.

The T-shaped test piece 20 is fixed on the surface of the fixing table 21 by a work fixing agent (paraffin having the composition (4) above), and a push-pull gauge 22 is connected to the T-shaped test piece 20. In this way, the tension F is applied to the push-pull gauge 22 the value of the tension F when the T-shaped test piece 20 leaves the fixing table 21 is measured. This force is the bonding strength of the work fixing agent 3.

By changing the surface temperature of the fixing table 21, i.e. the bonding surface temperature of the work fixing agent 3, the bonding strength of the work fixing agent was measured. As a result, the measurement result was obtained that the larger the difference between the fusion start temperature of the work fixing agent 3 and the bonding surface temperature, the larger the bonding strength, as described below.

Specifically, the bonding strength was 6 kg/cm² for the bonding surface temperature of 25 °C (47.1 °C in the difference between fusion start temperature and bonding surface temperature).

The bonding strength was 11 kg/cm² for the bonding surface temperature of 17 °C (55.1 °C in the difference between fusion start temperature and bonding surface temperature).

The bonding strength was 25 kg/cm² for the bonding surface temperature of 11 °C (61.1 °C in the difference between fusion start temperature and bonding surface temperature).

In the case where the T-shaped test piece is fixed with the same bonding strength, if a large difference between the fusion start temperature and the fusion end temperature of the work fixing agent 3 exists, it is necessary to melt the work fixing agent 3 by heating the work fixing agent 3 to a high temperature and therefore adversely affect the working efficiency.

Especially, this is a problem as a long time is required to heat a large work mounted on a machine tool such as a wire electric discharge machine (Fig. 6) to a high temperature. In such a case, a small difference between the fusion start temperature and the fusion end temperature could guarantee the required bonding strength at a low temperature and therefore correspondingly shorten the working time.

This operational effect can be exhibited more effectively by setting the difference between the fusion start temperature and the fusion end temperature of the work fixing agent to not more than 1 °C as in the second aspect of the invention.

The paraffin or polyethylene glycol defined in the third aspect of the invention has the advantage of a large work bonding strength (work fixing force) for the coagulated work, corrosion-resistance against the metal and an environment-friendly, substantially non-polluting material.

Japanese Unexamined Patent Publication No. 2004-156033, for example, discloses a fixing agent composed of salicylated derivative as a main component and a fixing method. However, this material is malodorous, toxic and not suitable for use in the machine shop. Specifically, an offensive odor is emanated by heating the fixing agent at the time of fixing the work, and therefore a special exhaust and deodorizing equipment are required. Even after that, the odor remains on the working cloths of the workers.

Also, it is very troublesome to dispose of the fixing agent and it may cause environment pollution when removing and cleaning the fixed work. This is a factor contributing to an increased machining cost. The salicylated derivative itself is also a material more expensive than paraffin or polyethylene glycol.

According to the present invention, paraffin and polyethylene glycol used as a work fixing agent are neither toxic nor generate harmful substances when being heated or fixed. Also, a water soluble cleanser free of environmental pollution problems can be used, without any fear, when cleaning the work after it is removed.

The stock solution of the cleanser containing a neutral surface active agent, or specifically, Dikaclean S (sic) (maker: Arbose (sic) Corp.) in liquid form is diluted ten times with water and heated to at least the melting point of the fixing agent and the work is dipped in this cleanser. Then, the paraffin attached to the work can be removed.

After that, the work is dipped in hot water not lower in temperature than the melting point. Then, even a slight amount of paraffin attached to the work can be removed. Returning to the room temperature, the paraffin that has been melted is solidified and floats on the surface of the cleanser used to clean the work. This is recovered and reheated. The remaining cleanser can be used again to remove paraffin.

Dikaclean S (trade name) finds an application also as a kitchen cleaner containing a neutral surface active agent, and therefore can be used safely and free of pollution without corroding an amphoteric metal such as aluminum or zinc.

Also, polyethylene glycol is not harmful and is water soluble. Therefore, the work after being machined can be washed in water and the fouled cleanser can be disposed of as ordinary industrial waste.

Further, the melting point of paraffin or polyethylene glycol can be easily adjusted to the temperature range near the room temperature at which the practical operation for fusion and coagulation is easy.

According to a fourth aspect of the invention, there is provided a fusion/coagulation work fixing agent described in any one of the first to third aspects, wherein the fusion start temperature and the fusion end temperature are in the range of 18 to 30 °C.

In this case, the work fixing agent may be heated and cooled only by an amount corresponding to the slight temperature change of about 2 °C in the temperature range near the room temperature. Therefore, the change due to thermal expansion and thermal stress before and after machining the work can be reduced more effectively.

A machining method according to a fifth aspect of the invention, comprises steps of: bringing the fusion/coagulation work fixing agent (3) of any one of the first to fourth aspects into contact with a work (1) on a fixing table (2) in molten state; cooling and coagulating the work fixing agent (3) thereby to fix the work (1) on the fixing table (2); machining the work (1) under this condition; and heating and melting the work fixing agent (3) after completion of the machining operation thereby to remove the work (1) from the fixing table (2).

As a result, there is provided a machining method which can exhibit the operational effects of the first to fourth aspects described above.

According to a sixth aspect of the invention, there is provided a work fixing table (101, 200) to fix a work (104) by a fixing agent (105, 150) adapted to be melted and coagulated, wherein the fixing table has a work fixing surface (102, 202) on which the work is placed, wherein the work fixing surface is formed with grooves (103, 103a, 103b, 130, 131, 131a, 203) in which the melted fixing agent can flow.

According to this invention, the work fixing surface on which the work is placed is formed with grooves, and therefore the fixing agent in molten state, while incapable of easily making its way into the contact surface between the work and the work fixing surface, can flow in such a manner as to fill the grooves first. As a result, the portions of the work and the work fixing surface other than the grooves can be brought into direct contact with each other without any gap therebetween. At the same time, once the fixing agent filled in the grooves is coagulated, the work and the work fixing surface can be fixed to each other by connecting the lower surface of the work contacted by the fixing agent and the grooves to each other. In the process, the contact surface between the work and the work fixing surface is not formed with any film of the work fixing agent, and therefore the parallelism between the work and the work fixing surface is not adversely affected.

According to a seventh aspect of the invention, the grooves are formed on the work fixing surface in a range wider than the work but smaller than the work fixing surface. Therefore, the grooves can cover the whole range of contact between the work and the work fixing surface. Thus, the contact area between the fixing agent that has made its way into the grooves and the lower surface of the work can be increased for an increased fixing strength. At the same time, the fixing agent is prevented from flowing out of the work fixing surface.

According an eighth aspect of the invention, the depth of the grooves from the work fixing surface is progressively increased in the direction in which the grooves are formed.

In this aspect of the invention, the depth of the grooves is progressively changed along the direction in which the grooves are formed. Therefore, the fixing agent in molten state can easily flow from the shallow portion toward the deep portion of the grooves along the slope of the grooves and easily covers the whole grooves.

According to a ninth aspect of the invention, the grooves can be formed radially on the work fixing surface. In this case, as in the tenth aspect, the depth of the grooves from the work fixing surface is greater, the nearer to the center (132) of the radius. Then, the molten fixing agent can easily flow from the outer peripheral portion of the radial grooves toward the center of radius along the slope of the grooves.

According to an 11th aspect of the invention, in any one of the sixth to tenth aspects, the work fixing surface is heated a temperature equal to or higher than the melting point of the fixing agent by a heating means (109, 109a, 109b) to heat the work fixing table. The fixing agent in molten state (105a, 105b, 150a, 150b) is poured into the grooves and brought into close contact with the work. After that, the work fixing surface is cooled to a temperature equal to or lower than the melting point to coagulate the fixing agent. In this way, the work and the work fixing surface can be fixed to each other.

This heating means, according to a 12th aspect, can be a sheet heater (109, 109a) closely attached on the work fixing table or a heater (109b) buried in the work fixing table.

According to a 13th aspect of the invention, in any one of the sixth to tenth aspects described above, the work fixing surface of the work fixing table is kept at normal temperature, a fixing agent of a material having the melting point in the temperature range between the normal temperature and the freezing point (about 0 °C) is molten and poured into the grooves of the work fixing surface kept at normal temperature. After that, the work fixing surface is cooled to the melting point or lower thereby to coagulate the fixing agent thereby to fix the work on the work fixing surface. The "normal temperature" is defined as the temperature of an object neither heated nor cooled, and in the range of, for example, 10 °C to 40 °C.

Specifically, a fixing agent having a melting point lower than the normal temperature, if used, can be molten on the work fixing surface kept at normal temperature without being forcibly heated. Further, the molten fixing agent can be easily coagulated, for example, by applying water lower than normal temperature but higher than the freezing point to the work fixing table and thus cooling the work fixing surface to a temperature lower than the melting point. The work can be easily removed from the work fixing surface, on the other hand, for example, by applying water at about normal temperature to the work fixing table and thus increasing the temperature of the work fixing surface to higher than the melting point so as to melt the work fixing agent.

The fixing agent in a molten state, as in a 14th aspect of the invention, can be easily poured into the grooves by promoting the flow thereof by an air blow (108a).

Also, according to a 15th aspect of the invention, a cooling liquid path (106) in which the cooling liquid (107a) flows is formed along the outer periphery of the work fixing surface and the cooling liquid lower in temperature than the melting point of the fixing agent is supplied into the cooling liquid path. In this way, the temperature of the work fixing table is reduced and the molten fixing agent in the grooves can be coagulated.

According to a 16th aspect of the invention, the cooling liquid (107a) lower in temperature than the melting point of the fixing agent is applied to at least one of the work fixing table and the work. By reducing the temperature of the work fixing surface in this way, the molten fixing agent in the grooves can be coagulated.

According to a 17th aspect of the invention, a metal case (113) containing the liquid (114) lower in temperature than the melting point of the fixing agent is placed on the work and by thus cooling the work and the work fixing surface, the molten fixing agent in the grooves can be coagulated.

As a result, the molten fixing agent, while being kept in close contact with the work, can be cooled and coagulated in situ without moving the fixing table. Therefore, the work is prevented from being displaced on the work fixing surface and thereby the precision machining of the work is not hampered.

According to an 18th aspect, the work fixed on the work fixing surface by the coagulated fixing agent is machined, and the liquid (107b) higher in temperature than the melting point of the fixing agent is applied to at least one of the work fixing table and the work. In this way, the fixing agent in a coagulated state is melted by heat conduction, so that the work can be easily removed from the work fixing table. Incidentally, the "liquid higher in temperature than the melting point of the fixing agent" that can be used is high-temperature (hot) water or a machining liquid such as a grinding fluid.

According to a 19th aspect of the invention, in the work fixing method of the 17th aspect, the work is fixed on the work fixing table, machined, removed from the work fixing table, and annealed to remove the distortion thereof, thereby making it possible to eliminate the warping of the work caused by the machining operation.

According to a 20th aspect of the invention, in any one of the 6th to 10th aspects described above, the work fixing surface (102) of a first fixing table (101) is heated to at least a first melting point in a first heating step and a first fixing agent (105) having the first melting point is poured into the grooves (103, 103a, 103b) of the fixing table. In this way, the first surface (104a) of the work is bonded with the work fixing surface of the first fixing table, after which the work is cooled to a temperature lower than the first melting point in a first cooling step. Thus, the first surface is fixed on the first fixing table, and the second surface (104b) in opposed relation to the first surface is machined. After that, the work fixing surface (202) of the second fixing table is heated to a temperature higher than the second melting point higher than the first melting point in a second heating step, and the second fixing agent (150) having a second melting point is poured into the grooves (203) of the second fixing table. While the first surface of the work and the first fixing table are kept fixed to each other, the second surface of the work is bonded to the work fixing surface of the second work fixing table. Then, the work is held between the first and second fixing tables, followed by the fusion/coagulation step in which the work is adjusted to the temperature between the first and second melting points. While keeping the second surface and the second fixing table fixed to each other, the first surface and the first fixing table are separated from each other. After that, the first surface is machined, followed by the remelting step in which the temperature of the work is increased to a temperature higher than the second melting point to melt the second fixing agent. In this way, the second surface is removed from the second fixing table.

According to this invention, the first fixing agent having the first melting point of a comparatively low temperature is melted by being heated to a temperature equal to or higher than the first melting point in the first heating step, and then coagulated by being cooled to a temperature lower than the first melting point in the first cooling step. In this way, the first surface of the work and the first fixing table in contact with each other are fixed to each other, and the second surface in opposed relation to the first surface is machined. Further, the second fixing agent having the second melting point higher than the first melting point is melted by being heated to a temperature equal to or higher than the second melting point in the second heating step, followed by the fusion/coagulation step in which the second fixing agent is coagulated by being adjusted to an intermediate temperature lower than the second melting point and higher than the first melting point. In this way, the machined second surface and the second fixing table in contact with each other are fixed to each other. At the same time, the first surface and the first fixing table are separated from each other with the first fixing agent molten at the intermediate temperature, and the exposed first surface is machined. By doing so, the first and second surfaces of the work in opposed relation to each other can be machined while being kept fixed on the fixing table. As a result, the roughness of, and the parallelism between, the two surfaces can be improved.

Incidentally, according to a 21st aspect of the invention, the second fixing agent can be melted by applying the liquid (107b) higher in temperature than second melting point to at least one of the second fixing table and the work in the remelting step.

The reference numerals inserted in the parentheses attached to the respective means described above denote the correspondence with the specific means in the embodiments described below.

The present invention may be more fully understood from the description of the preferred embodiments of the invention set forth below, together with the accompanying drawings.

### BRIEF DESCRIPTION OF THE DRAWINGS

Fig. 1 is a perspective view schematically showing the essential parts of a machine tool used in a first embodiment of the invention.
Fig. 2 is a sectional view taken in line A-A in Fig. 1.
Fig. 3 is a plan view of the fixing table shown in Fig. 1.
Fig. 4 is a diagram for explaining a method of measuring the melting point of the work fixing agent according to the invention.
Fig. 5A is a perspective view of a test piece used in the method of measuring the bonding strength of the work fixing agent according to this invention.
Fig. 5B is a diagram for explaining the bonding strength measuring method using the test piece shown in Fig. 5A.
Fig. 6 is a diagram for explaining the wire electric discharge machining method according to a second embodiment of the invention.
Fig. 7 is a diagram for explaining the primary machining step of the wire electric discharge machining method according to a second embodiment of the invention.
Fig. 8 is a diagram for explaining the step of attaching a leakproof tape after the primary machining step of the wire electric discharge machining method according to the second embodiment.
Fig. 9 is a perspective view showing the work after the secondary machining step of the wire electric discharge machining method according to the second embodiment.
Fig. 10 is a perspective view of the work fixing table and the work according to a third embodiment of the invention.
Fig. 11 is a schematic sectional view taken in line A-B in Fig. 10.
Fig. 12 is a diagram showing a general configuration of the machine tool according to the third embodiment.
Fig. 13 is a diagram ((a) to (e)) showing the machining step according to the third embodiment.
Fig. 14 is a diagram showing the cooling step according to a fourth embodiment of the invention.
Fig. 15A shows the work fixing table according to a fifth embodiment of the invention.
Fig. 15B a schematic sectional view taken in line C-D in Fig. 15A.
Fig. 16 is a diagram ((a) to (e)) showing the machining step according to a fifth embodiment of the invention.
Fig. 17 is a diagram showing a part of the machining step according to a sixth embodiment of the invention.
Fig. 18 is a diagram ((a) to (c)) showing the machining step according to a seventh embodiment of the invention.

### DESCRIPTION OF THE PREFERRED EMBODIMENTS

### (First embodiment)

A first embodiment of the invention is explained below with reference to the drawings.

The fusion/coagulation work fixing agent is used to fix a work (an object to be machined) on a fixing table in the machining operation. According to this embodiment, a sapphire substrate of an optical semiconductor (such as a blue emission diode) is used as a work and is subjected to superfine surface grinding.

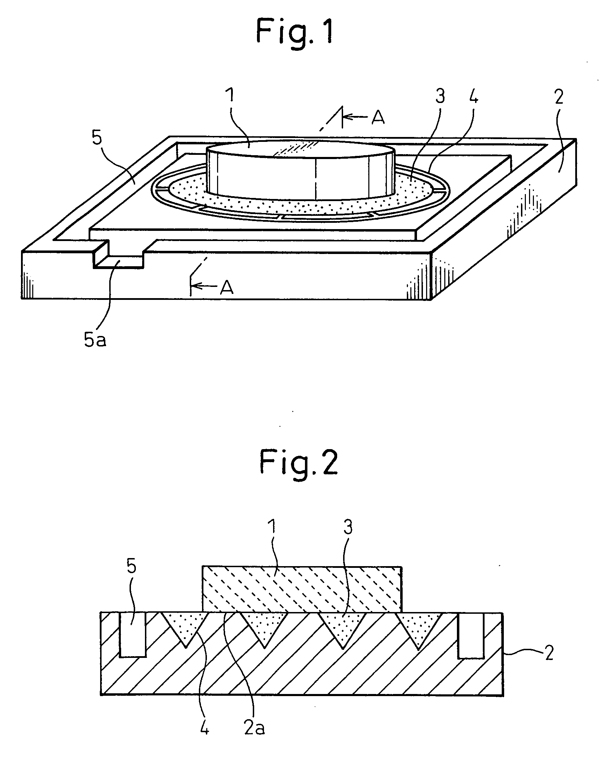

Figs. 1 to 3 are diagrams showing a superfine surface grinding method according to this embodiment. A work 1 is a disk-like sapphire substrate 50 mm diameter and 0.3 mm thick. A grooved fixing table 2 is formed of a magnetic iron material (for example, JIS(Japanese Industrial Standard)-S50C, JIS-SUS 430) having a rectangular contour.

A groove 4 into which a work fixing agent 3 is injected is formed on the surface of the fixing table 2. The groove 4 is formed in the shape of a combination of a plurality of concentric circles and a plurality of radial straight lines as illustrated in Fig. 3. As a result, all the plurality of the concentric circles of the groove 4 communicate with each other through the radial straight lines. The work fixing agent 3 in molten liquid state injected from a specific point in the groove 4 can cover the whole internal area of the groove 4.

Also, the combination of the plurality of the concentric circles and the plurality of the radial straight lines to form a groove makes it possible to keep the work fixing agent 3 in contact uniformly with all the bottom surface portions of the work 1.

The portion of the surface of the fixing table 2 not formed with the groove 4, as shown in Fig. 2, constitutes a flat surface portion 2a in direct contact with the work 1. As a result, the work 1 can be fixed in high parallelism with the fixing table 2 without any gap between the work 1 and the fixing table 2.

A coolant path 5 of a rectangular groove is formed on the outer periphery of the largest circle of the groove 4 is formed on the surface of the fixing table 2. This coolant path 5 functions to collect the cooling water applied on the surface of the fixing table 2 by a coolant supply means not shown and discharge it through an exhaust port 5a. The coolant includes both the coolant used for grinding and the coolant to cool and coagulate the work fixing agent 3.

The work fixing agent 3 according to this embodiment is normal paraffin having the fusion start temperature (melting point) of 22.5 °C and the fusion end temperature of 22.8 °C. This normal paraffin having a very small difference of 0.3 °C between the fusion start temperature and the fusion end temperature is obtained specifically by improving the purity of the normal paraffin composed of 91 % normal paraffin of carbon number 18, 6.7 % normal paraffin of carbon number 17 and 2.3 % normal paraffin of carbon number 19 to 99.3 %.

Next, the superfine surface grinding process according to this embodiment is explained specifically. The work 1 formed of a disk-like sapphire substrate is placed on the groove 4 and the flat portion 2a on the surface of the fixing table 2 as shown in Figs. 1 and 2. A protective sheet (not shown) is placed on the upper surface of the work 1, after which a weight of about 500 grams is placed on the work 1 through the protective sheet.

As a result, the work 1 is prevented from being raised above the fixing table 2 by the work fixing agent 3 in liquid state described later, and the lower surface of the work 1 can be closely attached to the flat surface portion 2a on the surface of the fixing table 2.

The protective sheet is to prevent the work 1 from being damaged by the weight, and is suitably made of a material having a small bonding strength with the work fixing agent 3, or specifically, of silicon rubber.

Next, the fixing table 2 with the work 1 placed thereon is placed on a hot plate of electrically heating type (not shown) to heat the fixing table 2 to a surface temperature of 23 °C higher than the melting point of the work fixing agent 3.

The work fixing agent 3 completely melted into liquid state is poured into the groove 4 of the fixing table 2. As the fixing table 2 is preheated to 23 °C as described above, the work fixing agent 3 in liquid state is smoothly extended to the whole area of the groove 4 without coagulation when coming into contact with the surface of the groove 4. The work fixing agent 3 is poured until it is filled in the groove 4 and comes into contact with the lower surface of the work 1.

The work fixing agent 3 in liquid state is contained in a metal case of a metal material such as stainless steel. This metal case is placed on the hot plate of electrically heating type and heated to 23 °C. As a result, the work fixing agent 3 is kept in liquid state in the metal case.

Next, the coolant lower in temperature than the melting point of the work fixing agent 3 is supplied into the coolant path 5 of the fixing table 2 thereby to cool the surface of the fixing table 2 to 21 °C. As a result, the work fixing agent 3 in the groove 4 is coagulated and changes to solid phase from liquid phase, thereby making it possible to fix the work 1 closely on the surface of the fixing table 2.

Then, the weight and the protective sheet are removed from the fixing table 2. The protective sheet, which is formed of silicon rubber having a small bonding strength with the work fixing agent 3, can be easily separated from the work fixing agent 3.

After that, the fixing table 2 on which the work 1 is fixed is fixed electromagnetically on an electromagnetic chuck table of a grinding machine, and while applying the coolant of 21 °C lower than the melting point of the work fixing agent 3 over the work 1, the surface of the work 1 is ground by a grinding tool by a predetermined amount (0.6 microns, for example). The coolant used for this grinding process flows into the coolant path 5 of the fixing table 2 and is discharged out of the fixing table 2 from the exhaust port 5a.

At the end of the grinding process on the work 1, the coolant of 23 °C higher in temperature than the melting point of the work fixing agent 3 is applied over the surface of the work 1. As a result, the work fixing agent 3 is melted into liquid state, and therefore the work 1 is released from the fixed state with the work fixing agent 3, so that the work 1 can be easily removed from the fixing table 2. Incidentally, the work fixing agent 3 in liquid state, together with the coolant, flows into the coolant path 5 and is discharged out of the fixing table 2 through the exhaust port 5a. The after-cleaning of the work 1 is conducted by dipping the work 1 in the Dikaclean (sic) cleanser described above.

As understood from the foregoing description, according to this embodiment, the liquid work fixing agent, at 23° C in temperature, staying in the groove 4 is cooled to 21 °C. By thus coagulating the work fixing agent 3, the work 1 can be fixed. After machining the work 1, the work fixing agent 3 coagulated at 21 °C is melted by being heated to 23 °C and thereby making it possible to easily remove the work 1 from the fixing table 2.

As described above, the work 1 is fixed and removed using the phase change of the work fixing agent 3 between coagulation and fusion within a very small temperature width of 2 °C between 23 °C and 21 °C. Thus, the work can be fixed and removed within a short length of time for an improved machining workability.

Also, the work 1 is fixed and removed within the very small temperature range of 2 °C between 21 °C and 23 °C near the room temperature. Therefore, the difference in thermal expansion of the work 1 before and after machining is very small. This not only improves the machining accuracy but also suppresses the deterioration of the material of the work 1 by reducing the thermal stress placed thereon.

The sapphire substrate of an optical semiconductor used as the work 1 in the first embodiment described above is only one application of the work 1, and this invention is applicable with equal effect to machining operation on the work 1 formed of a thin sheet of stainless steel, non-iron metal or ceramic, or a fragile material low in strength.

Unlike in the first embodiment in which the work 1 is ground, this invention is of course applicable also to other machining operations such as wire electric discharge machining or milling.

### (Second embodiment)

The second embodiment represents a case in which the work fixing agent according to the invention is used for the wire electric discharge machining. Fig. 6 shows a wire electric discharge machining method according to the second embodiment. The work 1 is cubically formed of a steel material (JIS-S50C) 100 mm wide, 100 mm deep and 100 mm tall.

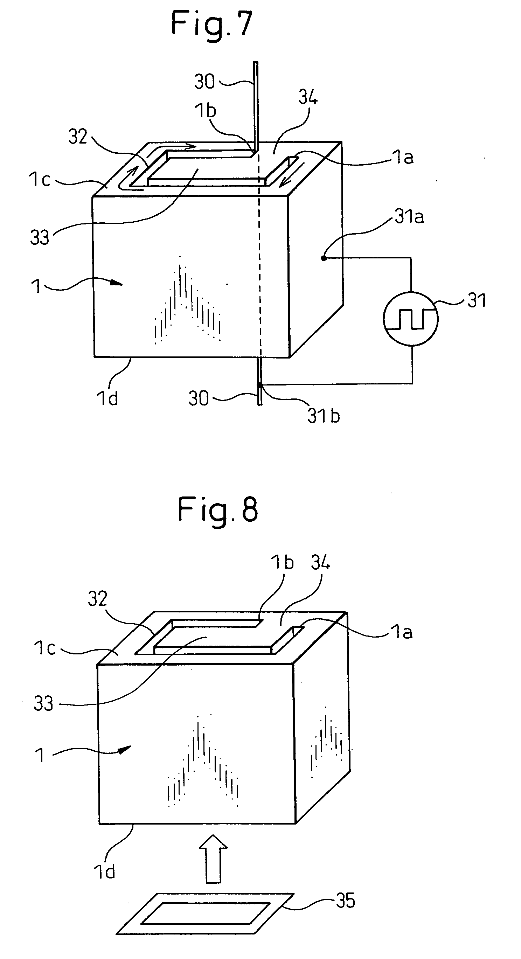

In the wire electric discharge machining process according to the second embodiment, as shown in Fig. 7, the wire discharge machining is conducted along a predetermined machining track from the machining start point 1a toward the machining stop point 1b of the work 1 (primary machining).

Specifically, with the coolant (water) filled around the work 1, the work 1 and the wire 30 are impressed with a high-frequency voltage from a machining power supply 31 connected by terminals 31a, 31b. At the same time, a work table (not shown) on which the work 1 is placed is moved along the predetermined machining track thereby to conduct the electric discharge machining with the wire 30.

By this wire electric discharge machining process, a machined groove 32 having a predetermined width (0.3 mm, for example) is formed from the upper surface 1c through the bottom surface 1d of the work 1. To form this machined groove 32, the wire electric discharge machining process is repeated a plurality of times, or thrice, for example, thereby reducing the surface roughness of the machined groove 32. A cut-out portion 33 is formed at the central portion of the work 1 by the machined groove 32.

In the primary machining process, a portion 34 yet to be machined (hereinafter referred to as the raw portion 34) is left without being machined, and the electric discharge machining process is stopped provisionally at the machining stop point 1b. After that, the coolant (water) is removed from around the work 1 from inside the machine tool.

Next, as shown in Fig. 8, a heat-resistant leakproof tape 35 is applied to the bottom surface 1d of the work 1 to seal the machined groove 32. This leakproof tape 35 can be formed along the predetermined shape of the machined groove 32.

Next, a magnetic rubber heater 36 (Fig. 6) having an electric heater built therein is mounted on the five surfaces other than the upper surface 1c of the work 1 to heat the work 1.

The work 1 is heated to a temperature not lower than the fusion end temperature of the work fixing agent 3a, or specifically heated to 53 °C. It takes 15 minutes to heat the work 1 from the room temperature of 25 °C to 53 °C. The work fixing agent 3a is water insoluble paraffin (paraffin of composition (1) described above) having the fusion start temperature of 50.4 °C and the fusion end temperature of 51.7 °C.

After heating the work 1 to 53 °C or higher as described above, the fixing agent 3a in a solid state is melted by being coated on the upper surface 1c of the work 1. After the fixing agent 3a is melted, an anti-separation plate 37 is placed on the fixing agent 3a thus melted.

That portion of the machining groove 32 on the upper surface 1c of the work 1 which is near the raw portion 34, or specifically, the portion near the machining start point 1a is coated with a water insoluble conductive work fixing agent 3b. This work fixing agent 3b is the same paraffin as the work fixing agent 3a (paraffin having the composition (1) described above), and therefore has the fusion start temperature of 50.4 °C and the fusion end temperature of 51.7 °C.

The work fixing agent 3b is mixed with carbon particles to secure the conductivity thereof. Specifically, 50 weight % of the paraffin having the composition (1) described above and 50 weight % of carbon particles having an average particle diameter of 5 microns are mixed with each other to make up the work fixing agent 3b.

As the bottom surface of the machined groove 32 is sealed by the leakproof tape 35, the melted work fixing agents 3a, 3b which may flow into the machined groove 32 do not drop off the machined groove 32.

After that, the magnetic rubber heater 36 is removed from the work 1, and the work 1 is cooled to at least the fusion start temperature 50.4 °C of the fixing agent 3a, 3b thereby to coagulate (solidify) the paraffin making up the fixing agents 3a, 3b.

In this case, the work 1 may be cooled naturally or by attaching waste cloth or the like soaked with water to the work 1. After the fixing agents 3a, 3b are coagulated, the machining water kept at a predetermined temperature of 20 °C is filled in the machine tool thereby to cool both the work 1 and the anti-separation plate 37 to 20 °C.

As a result, the difference between the fusion start temperature (50.4 °C) of the fixing agents 3a, 3b and the bonding surface temperature (20 °C) is kept at 30.4 °C. Therefore, the bonding strength of the fixing agents 3a, 3b of the order of 5 kg/cm² is guaranteed. As a result, the work cut-out portion 33 is held without coming off from the body of the work 1.

The work fixing agent 3b is conductive, and therefore, the conductivity of the work cut-out portion 33 is also secured at the time of machining the remaining raw portion 34. Thus, the raw portion 34 can be finished to a satisfactory surface roughness by a plurality of (say, three) electric discharge machining sessions.

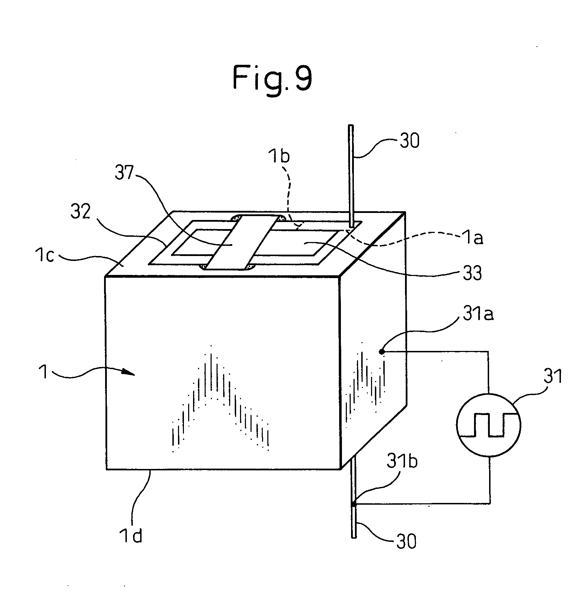

The wire electric discharge machining (secondary machining operation) is conducted on the raw portion 34 thereby to cut off the raw portion 34 as shown in Fig. 9. In this way, the work cut-out portion 33 can be completely cut off from the body of the work 1. Under this condition, the work cut-out portion 33 can be held on the,body of the work 1 by the anti-separation plate 37 and the fixing agent 3a. Therefore, the work cut-out portion 33 is not deformed by coming off after being completely cut off.

To remove the work cut-out portion 33 after cutting off the raw portion 34, the work 1 is dipped in the hot water of not lower than 51.7 °C which is the fusion end temperature of the fixing agents 3a, 3b, or the work 1 is heated to 51.7 °C or higher by the magnet rubber heater 36 again.

### (Third embodiment)

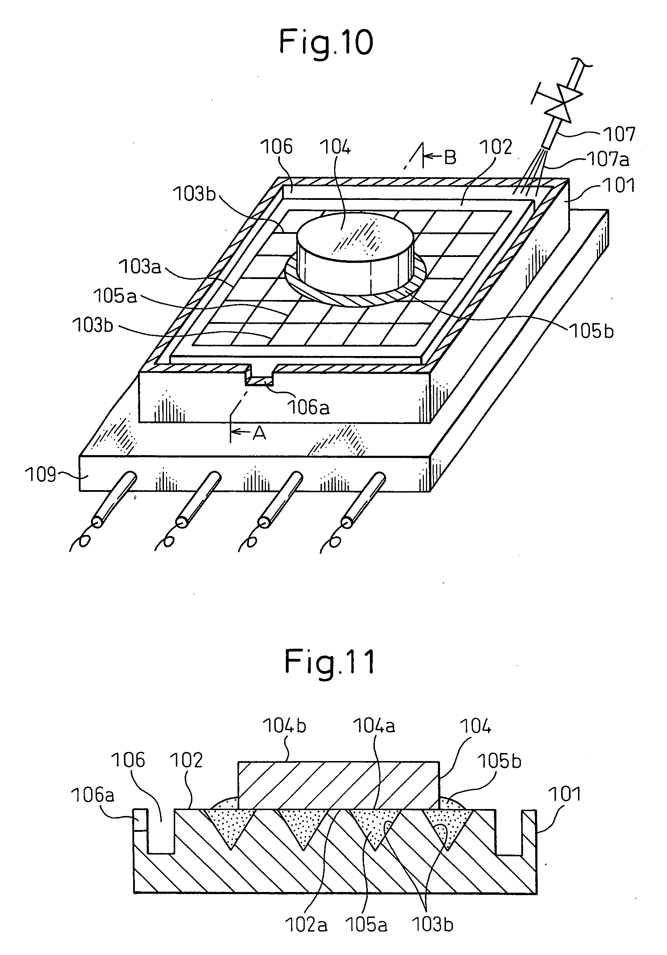

The third embodiment of the invention is explained below with reference to the drawings. Fig. 10 is a perspective view of the work fixing table 101 and the work 104 according to the third embodiment. The manner in which the work 104 is fixed and machined is described later.

The work fixing table 101 is made of a steel material JIS-S50C and parallelepiped in shape having side lengths of 100 mm each and a thickness of 15 mm. A rectangular coolant path 106 which is a groove for supplying the coolant 107a such as water supplied from the coolant supply port 107 is formed on the outermost peripheral portion of the work fixing surface 102. Further, an exhaust port 106a to discharge the coolant from the coolant path 106 is formed on the outer wall of the coolant path 106.

A work contact surface 102a smaller than the work fixing surface 102 is formed to the size of 80 mm x 80 mm inside the coolant path 106 of the work fixing surface 102. The work contact surface 102a is formed with a grid of grooves 103 to be filled with the fixing agent as described later. The grooves 103 include a groove 103a formed along the outer periphery of a rectangle and grid-like grooves 103b arranged inside the groove 103a and connecting the opposite sides of the groove 103a.

Each of the grooves has a triangular section with an opening width of 3 mm and a depth of 0.5 mm. The grid opening interval is 5 mm. The groove depth is not necessarily constant but may be progressively larger in the direction in which the grooves 103b are formed. As a result, the fixing agent 105a in molten state described later can flow toward the deeper portion of the groove 103b.

The bonding strength (maximum load) between the work contact surface 102a and the work 104 is determined by the shearing force as a material characteristic of the fixing agent and the opening area (= about the opening width x the groove length) of the groove 103 immediately below the work 104. Specifically, the opening area of the groove 103 is equal to the area of the portion not in direct contact between the work 104 and the work contact surface 102a and, therefore, is considered to be proportional to the bonding strength. The larger the opening area of the groove 103, however, the larger the amount of the fixing agents 105a, 105b to be used. The opening area, i.e. the number of grooves 103b, therefore, is not required to be increased more than necessary.

The work 104 is placed on the work fixing surface 102 (specifically, the work contact surface 102a). The work 104 according to the first embodiment is quartz glass 50 mm in diameter and 0.5 mm thick. Specifically, the range in which the groove 103 is formed is larger than the work 104, and the grid-like grooves 103b extend outward of the contact end of the work 104.

Incidentally, Fig. 10 shows the manner in which the work fixing table 101 is placed on the hot plate 109 making up a heating means.

Fig. 11 is a sectional view taken in line A-B in Fig. 10 and schematically shows the manner in which the work 104 is fixed by the fixing agents 105a, 105b on the work fixing table 101. One surface (first surface) 104a of the work 104 and the work contact surface 102a of the work fixing surface 102 are in direct contact with each other. The grooves 103a, 103b formed on the work fixing surface 102 are filled with paraffin having a melting point of 75 °C as the fixing agent 105a in molten state having a fluidity.

Specifically, the greatest part 105a of the molten paraffin is filled in the grooves 103b, and the remaining paraffin 105b leaks out and is deposited around the ends of the work 104. The fixing agents 105a, 105b cannot exist between the first surface 104a and the work contact surface 102a. Therefore, no gap can be formed between the work 104 and the work fixing surface 102.

The molten paraffin is coagulated by being cooled to a temperature lower than the melting point, and as the fixing agent 105a is fixed in the groove 103b, fixedly bonds the first surface 104a of the work 104 and the bottom surface (the slope of a triangle pole in Fig. 2) of the grooves 103b to each other. Also, the fixing agent 105b around the ends of the work 104 contributes to the fixed bonding between the work 104 and the work contact surface 102a.

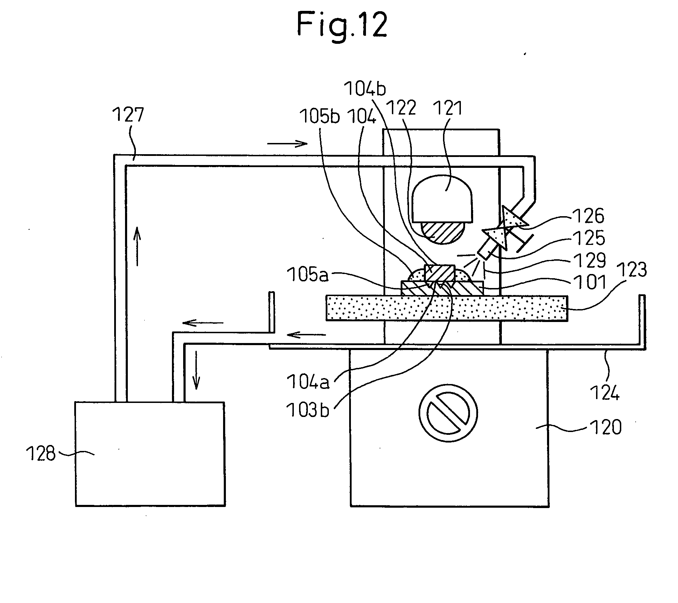

Next, the steps of machining the work 104 are explained. Fig. 12 is a diagram showing a general configuration of the machine tool used for the machining process according to the third embodiment.

A rotary grinding stone 122 having a stone cover 121 to secure safety is arranged on the body 120 of the machine tool, i.e. a grinding machine. The lower surface (first surface) 104a of the work 104 is fixed on the work fixing table 101 through the fixing agents 105a, 105b. The work fixing table 101 formed of steel material (JIS-S50C) is magnetically attracted to the table 123 of electromagnetic chuck type, which table 123 is adapted to move in four directions (up, down, front and rear), so that the upper surface (second surface) 104b of the work 104 fixed on the work fixing table 101 is ground by the rotary grinding stone 122.

In the process, the second surface 104b of the work 104 to be machined is sprayed with a coolant 129, functioning as a machining liquid, from a coolant storage unit 128 through a coolant hose 127, a flow rate adjusting coolant on/off cock 126 and a coolant spray hole 125. In this way, the coolant 129 sprayed on the second surface 104b of the work 104 flows down onto a coolant receptacle 124 under the table 123 while removing the chips generated during the machining process. The coolant is then returned to the coolant storage unit 128 from the coolant receptacle 124.

The coolant storage unit 128 includes, though not shown, a mechanism for removing chips, a pump for supplying the coolant 129 to the portion to be machined and a temperature control mechanism to adjust the temperature of the coolant 129 supplied.

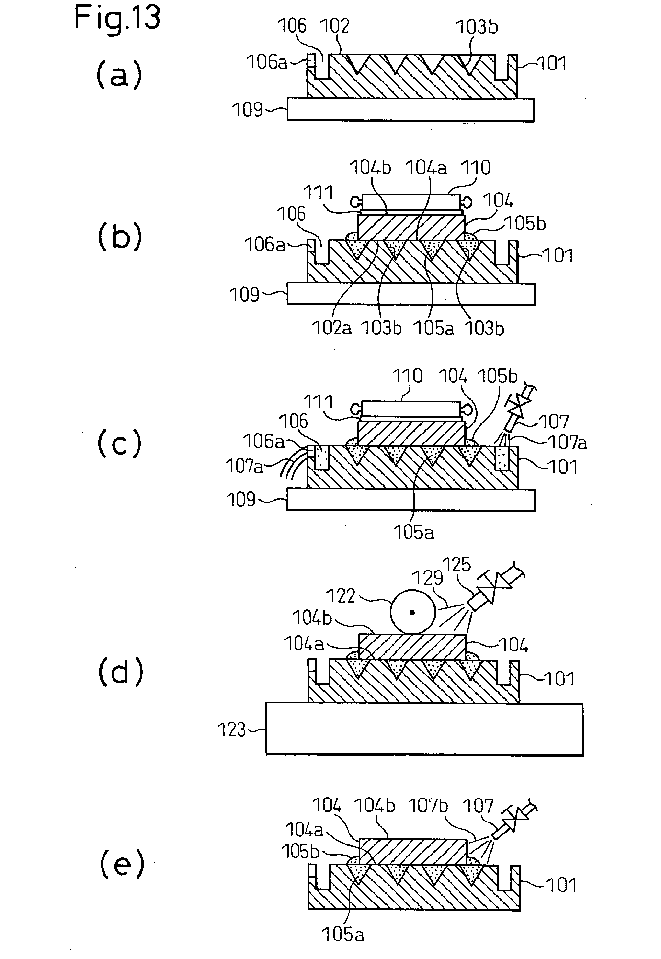

Fig. 13 is a diagram for explaining the machining steps concentrated on the work fixing table 101 and the work 104. The work 104, before being mounted on the machine tool, is fixed on the work fixing table 101. As shown in Fig. 13(a), the work fixing table 101 with nothing placed thereon is placed on the hot plate 109 in horizontal position and heated to 90 °C higher than the melting point (75 °C) of the fixing agent 105a (Fig. 13(a)).

Next, as shown in Fig. 13(b), with the work fixing table 101 thus heated, the work 104 of quartz glass is placed on the work fixing surface 102 or, specifically, in the area formed with the grid-like grooves 103b. After that, a weight is placed on the upper surface 104b of the work 104 through a silicon rubber 111 for protecting the work. As a result, the lower surface (first surface) 104a of the work 104 is closely attached to the work fixing surface 102 of the work fixing table 101 without any gap therebetween.

Further, paraffin making up the fixing agent 105 liquefied by being heated to a temperature higher than the melting point (75 °C) is poured into the grid-like grooves 103b around the work 104. In the process, the fixing agent 105a in liquid form quickly flows into and fills up the grooves 103b under the lower surface 104a of the heated work 104. After the fixing agent 105a fills up extensively gaps between the work 104 and the grooves 103b of the work fixing surface 102, the power switch of the hot plate 109 is turned off.

Next, as shown in Fig. 13(c), water (coolant) 107a at normal temperature is supplied into the coolant path 106 formed on the work fixing table 101 from the liquid supply port 107. In this way, the work fixing table 101 is cooled to lower than 75 °C, i.e. the melting point of the fixing agent 105a thereby to coagulate the fixing agents 105a, 105b (cooling step). In the process, the cooling time can be shortened by continuing to supply the cooling water 107a to the coolant path 106 while being discharged from the exhaust port 106a.

Next, after the fixing agents 105a, 105b are coagulated, as shown in Fig. 13(d), the weight 110, etc. are removed and the work fixing table 101 with the work 104 fixed thereon is fixed on the table 123 of electromagnetic chuck type of the grinding machine. While applying the coolant 129, the upper surface (second surface) 104b of the work 104 is ground by about 50 µm as a machining step.

After the machining step, as shown in Fig. 13(e), the work fixing table 101 with the work 104 fixed thereon is removed from the table 123 of the grinding machine. The hot water 107b at 90 °C, a temperature higher than the melting point (75 °C) of the fixing agents 105a, 105b, is applied to the work 104 and the work fixing surface 102 through the liquid supply port 107. In this way, the fixing agents 105a, 105b are melted again, and the work 104 is removed from the work fixing table 101. Incidentally, in this step of remelting the fixing agents 105a, 105b, as in (a) described above, the work fixing table 101 may be placed on and heated by the hot plate 109.

According to the third embodiment, a thin sheet (quartz glass sheet 0.5 mm thick) is ground (by 50 µm), and therefore the work 104 may be distorted by machining. Thus, the work 104 removed from the work fixing table 101 may be warped. In order to remove the distortion of the work 104 after being machined, therefore, the work 104 is completely degreased with a hydrocarbon cleanser (NS Clean of Japan Energy, for example), after which the quartz glass work 104 is held with an alumina plate and annealed in the electric furnace for one hour at 1150 °C.

As described above, even in the case where a non-metallic material such as the quartz glass work 104 is machined in the aforementioned manner, the work 104 can be easily mounted on and demounted from the work fixing table 101 using the fixing agent 105a, 105b capable of being melted and coagulated. Also, at the time of fixing the work 104 and the work fixing table 101 to each other, the gap between them can be completely eliminated, and therefore the machining accuracy, or especially the parallelism of the work 104 can be improved.

### (Fourth embodiment)

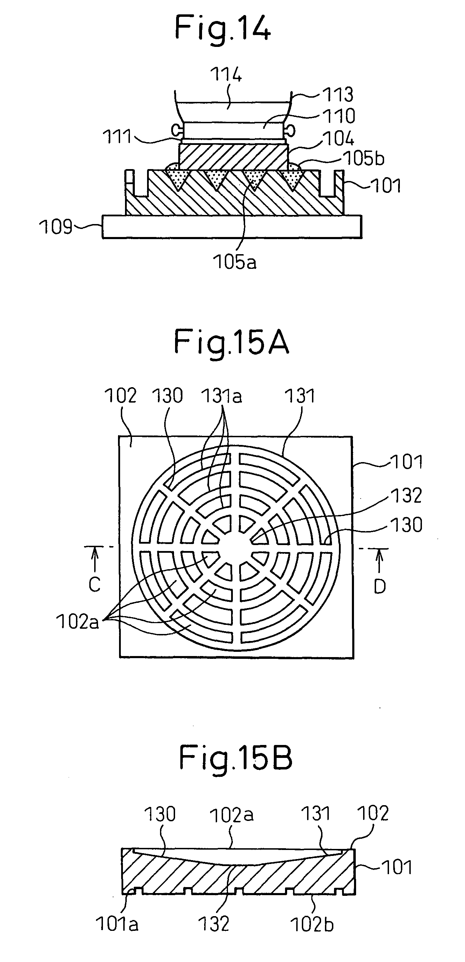

Next, the machining process according to a fourth embodiment of the invention is explained. The third and fourth embodiments have the same configuration except for the material and shape of the work 104 and the melting point of the fixing agent 105. The description of the fourth embodiment that follows is concentrated on those parts different from the third embodiment and made with reference to Figs. 10 to 13 showing the same configuration as the third embodiment. According to the fourth embodiment, of the machining steps shown in Fig. 13, the steps shown in Fig. 13(c) are replaced by those shown in Fig. 14.

According to the fourth embodiment, the work fixing table 101 is configured the same way as in the third embodiment. Specifically, the material is JIS-S50C, the outside dimensions are 100 x 100 x 15 (mm), the area formed with the groove 103 is 80 x 80 (mm), the opening width of the grid-like grooves 103a, 103b is 3 mm and the depth thereof is 0.5 mm, and the groove interval is 5 mm. Also, as in the third embodiment, the coolant path 106 and the exhaust port 106a are formed on the outer peripheral portion of the work fixing surface 102.

This work fixing table 101 is heated to 70 °C, i.e. a temperature higher than the melting point (51 °C) of the fixing agent 105 on the hot plate 109 (Fig. 13(a)).

On the work fixing surface 102 of the work fixing table 101 thus heated, according to the fourth embodiment, the work 104 made of a sapphire plate 40 mm in diameter and 0.4 mm thick is placed. After that, a metal weight 110 is placed on the upper surface 104a of the work 104 through the silicon rubber 111. As a result, the lower surface (first surface) 104a of the work 104 of the sapphire plate and the work fixing surface 102 of the work fixing table 101 are closely attached to each other without any gap therebetween.

According to the fourth embodiment, while the work 104 and the work fixing table 101 are heated, solid paraffin (melting point 51 °C) making up the fixing agent 105 is coated on the grooves 103b around the ends of the work 104. The solid fixing agent 105 is immediately melted into liquid state and flows into and fills up the groove 103b immediately under the work 104 without any gap (Fig. 13(b)).

The power switch of the hot plate 109 is turned off, and, to cool the fixing agents 105a, 105b, according to the fourth embodiment, as shown in Fig. 14, an aluminum case 113 having a high heat conductivity and containing cooling water 114 is placed on the metal weight 110. As a result, the heat of the work 104 and the work fixing table 101 are transmitted to the water-containing case 113 through the silicon rubber 111 and the weight 110, so that the work 104 and the neighboring portion of the work fixing table 101 are cooled. The water-contained case 113 may be either formed with an opening, as shown in Fig. 14, or is hermetically closed.

Once the work 104 is cooled to a temperature lower than the melting point 51 °C of the fixing agent 105, the fixing agents 105a, 105b are coagulated. As a result, after the work 104 is fixed on the work fixing table 101, the water-contained case 113, the weight 110 and the silicon rubber 111 are removed from the work 104, and the work fixing table 101 is fixedly placed on the table 123 of electromagnetic chuck type of the grinding machine. While applying the coolant 129, the machining step is executed to grind the surface by 20 µm (Fig. 13(d)).

After machining, the work fixing table 101 with the machined work 104 fixed thereon is removed from the table 123 of the grinding machine, and hot water 107b at 70 °C, a temperature higher than the melting point (51 °C) of the fixing agents 105a, 105b, is applied on the work 104 and the work fixing surface 102 from the liquid supply port 107. In this way, the fixing agents 105a, 105b are remelted and the work 104 removed from the work fixing table 101 (Fig. 13(e)).

To remove the machining-caused distortion of the work 104, also in the fourth embodiment, the work 104 is degreased completely with a hydrocarbon cleanser, after which the sapphire work 104 is held with an alumina sheet and annealed in an electric furnace for one hour at 800 °C.

### (Fifth embodiment)

Next, a fifth embodiment of the invention is explained. The fifth embodiment is different from the third and fourth embodiments described above in the shape of the work fixing table 101, and the groove 103, as shown in Fig. 15A and B. Fig. 15A is a top plan view of the work fixing table 101 according to the fifth embodiment, and Fig. 15B a sectional view taken in line C-D in Fig. 15A.

The work fixing table 101 according to the fifth embodiment is a parallelepiped block made of JIS-S50C having the size of 300 mm by 300 mm by 15 mm. The work fixing surface 102 of the work fixing table 101 is formed with six radial grooves 130, the outermost peripheral groove 131 connecting the ends of the radial grooves 130 and a plurality of concentric circular grooves 131a. The opening width of the grooves 130, 131, 131a is 3 mm.

The depth of the radial grooves 130 from the work fixing surface 102 is progressively increased toward the radial center 132 from the outer periphery. Specifically, the outermost peripheral circular groove 131 is 250 mm in diameter and 0.2 mm deep, and the outermost peripheral portion of the radial grooves 130 has also the same depth of 0.2 mm. The groove depth at the radial center 132 is 1.5 mm, and the groove depth changes along a linear slope from the outermost peripheral portion to the radial center 132. Each of the concentric circular grooves 131a is formed in the same depth as the portion of the radial grooves 131 with which the particular concentric circular groove 131a intersects.

According to the fifth embodiment, as described above, the radial grooves 131 of the work fixing table 101 become progressively deeper along a slope from the outer peripheral portion toward the central portion, and therefore the fixing agent 105, in liquid form, easily flows from the outer peripheral portion toward the central portion. In the case where the contact area between the work 104 and the work fixing table 101 is large, therefore, the fixing agent 5 is easily extended over the grooves 103 immediately under the work 104. Also according to the fifth embodiment, the size of the grooves 103 (the area in which the grooves 103 are formed on the work fixing surface 102) is preferably smaller than the work fixing surface 102 of the work fixing table 101 and larger than the work 104.

The bottom surface 102b (the surface in opposed relation to the work fixing surface 102) of the work fixing table 101 according to the fifth embodiment has a plurality of paths 101a for coolants including water and other machining liquids.

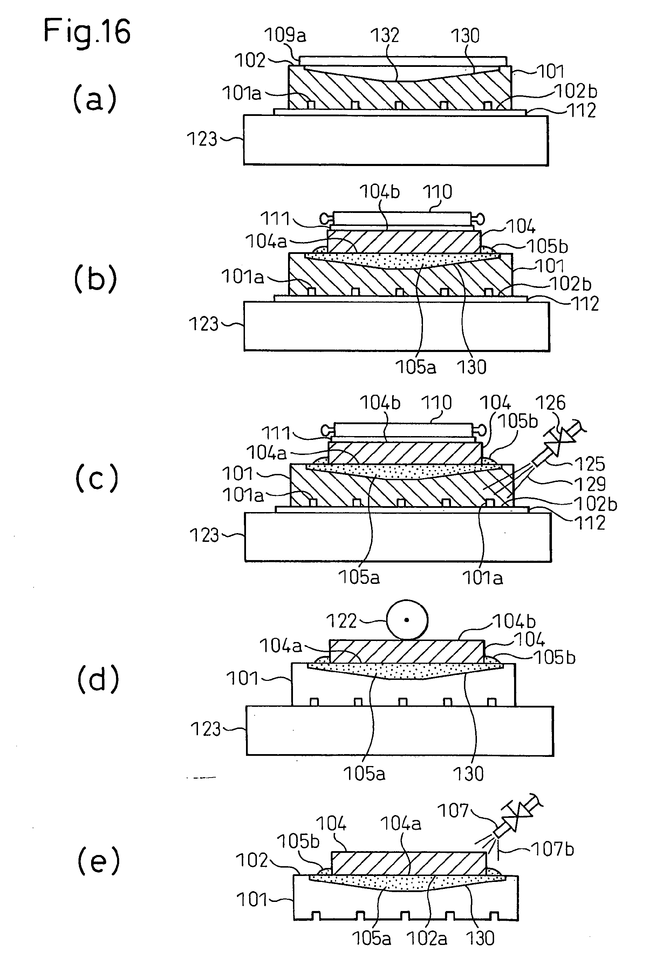

Next, the machining process of the work 104 according to the fifth embodiment is explained with reference to Fig. 16. According to the fifth embodiment, the grinding machine shown in Fig. 12 is used as in the third and fourth embodiments.

First, as shown in Fig. 16(a), the work fixing table 101 is placed on a heat-insulating silicon rubber sheet 112 on the table 123 of electromagnetic chuck type of the grinding machine. Further, a silicon rubber heater 109a of magnet type is mounted on the work fixing surface 102 of the work fixing table 101. Then, the work fixing surface 102 is heated to 70 °C.

Next, the silicon rubber heater 109a is removed from the work fixing surface 102, and the quartz work 104 200 mm in diameter and 2 mm thick is placed on the work fixing surface 102 in such a manner that the center of the circle of the work 104 and the radial center 132 of the groove 103 formed on the work fixing surface 102 substantially coincide with each other. Further, a metal weight 110 is placed on the upper surface 104b of the work 104 through a protective silicon rubber 111. As a result, the quartz work 104 is closely attached to the work fixing surface 102 (more specifically, the work contact surface 102a) without any gap therebetween.

The paraffin (melting point 51 °C) constituting the fixing agent 105 heated into liquid form is poured into the grooves 131, 131a around the quartz work. In the process, the fixing agent 105 in liquid state can easily flow from the outer periphery toward the center along the slope of the radial grooves 131 (Fig. 16 (b)).

Once the fixing agents 105a, 105b are filled up in the entire groove 103 (especially, the portion of the grooves immediately under the work 104), the coolant 129 constituting a machining oil controlled to room temperature in the coolant storage unit 128 is discharged from the coolant spray port 125, which coolant flows into the coolant path 101a on the bottom surface 102b of the work fixing table 101, thereby cooling the work fixing table 101 and the work 104 (Fig. 16(c)).

The work fixing table 101 is cooled to lower than 151 °C, the melting point of the fixing agent 105, thereby to coagulate the fixing agents 105a, 105b and fix the work 104 on the work fixing surface 102. After that, the heat-insulating silicon rubber sheet 112 laid under the bottom surface 102b of the work fixing table 101 is removed, and the work fixing table 101 is fixedly placed directly on the table 123 of electromagnetic chuck type of the grinding machine. Then, the upper surface 104b of the work 104 is ground (Fig. 16(d)).

After machining, as shown in Fig. 16(e), the work fixing table 101 with the work 104 fixed thereon is removed from the table 123 of the grinding machine. Then, hot water 107b at 70 °C and hotter than the melting point (51 °C) of the fixing agents 105a, 105b is supplied on the work 104 and the work fixing surface 102 from the liquid supply port 107, so that the fixing agents 105a, 105b are remelted and the work 104 is removed from the work fixing table 101. As required, like in the third and fourth embodiments described above, the distortion of the work 104 can be removed by being annealed.

### (Sixth embodiment)

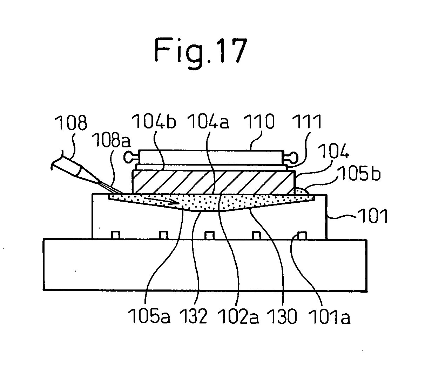

Next, the sixth embodiment of the invention is explained. The sixth embodiment, like the fifth embodiment described above, uses the work fixing table 101 having the work fixing surface 102 formed with the radial grooves 130 and a plurality of the concentric circular grooves 131, 131a. The sixth embodiment, however, is different from the fifth embodiment described above in the size and material of the work 104, the size of the work fixing table 101 and the melting point of the fixing agent 105. Now, an explanation is made mainly about the parts different from the fifth embodiment with reference to Figs. 12, 15, 16 showing a similar configuration to the fifth embodiment. According to the sixth embodiment, the machining process shown in Figs. 16(a), 16(b) is replaced by the process shown in Fig. 17.

The work fixing table 101 according to the sixth embodiment is a parallelepiped block of JIS-S50C having the size (length x width) 500 mm x 500 mm with a thickness 25 mm. As in the fifth embodiment shown in Figs. 15A, 15B, the groove 103 includes six radial grooves 130 and a plurality of concentric circular grooves 131, 131a. The diameter of the outermost peripheral circular groove 131 is 450 mm. The opening width of the grooves 130, 131, 131a is 3 mm, the groove depth is 0.5 mm at the outermost peripheral circle and 3 mm at the radial center 132. The depth of the radial grooves changes as a linear slope.

The sixth embodiment uses paraffin having a melting point of 18 °C which assumes the liquid state at room temperature. Unlike the third to fifth embodiments described above, therefore, the heating process for temporarily melting the fixing agent 105 to fix the work 104 is not required.

Next, the machining process according to the sixth embodiment is explained.

First, the work fixing table 101 is placed on the table 123 of electromagnetic chuck type of the grinding machine, and a glass work 104 400 mm in diameter and 4 mm thick is placed on the work fixing surface 102 in such a manner that the circular centers of the two substantially coincide with each other. Further, a metal weight 110 is placed on the upper surface 104b of the work 104 through a protective silicon rubber 111. As a result, the glass work 104 is closely attached to the work fixing surface 102 (more specifically, the work contact surface 102a) without any gap therebetween.

Then, paraffin (having the melting point at 18 °C) providing the fixing agent 105 in liquid state at room temperature is poured into the grooves 130, 131 near the peripheral end of the work 104. In the process, it may happen that the area of the work 104 is large and the fixing agent 105 in liquid state fails to extend sufficiently over the groove 103 immediately under the work 104. In such a case, as shown in Fig. 17, an air blow 108a from the air blow nozzle 108 is applied into the grooves 130 at the ends of the work 104. In this way, the fixing agent 105 in liquid form is forcibly supplied to the radial center 132 of the grooves 130, thereby making it possible to extend the fixing agent 105a over the entire portion of the grooves 130, 131a immediately under the work 104.

Once the fixing agent 105a is filled up in the entire portion of the grooves 130, 131a immediately under the work 104, the grinding liquid (coolant) 129 controlled to 10 °C, a temperature lower than the melting point (18 °C), is applied to the weight 110 placed on the work 104, the work 104 and the work fixing surface 102. In this way, the work 104 and the work fixing surface 102 are cooled to a temperature lower than the melting point 18 °C.

As a result, after coagulating the fixing agents 105a, 105b, the weight 110 and the silicon rubber 111 are removed from the upper surface 104b of the work 104, and then the upper surface 104b of the work 104 is ground on the table 123 of the grinding machine (Fig. 16(d)).

After machining, as shown in Fig. 16(e), the work fixing table 101 with the work 104 fixed thereon is removed from the table 123 of the grinding machine. Then, water 7b at room temperature 25 °C, a temperature higher than the melting point of the fixing agents 105a, 105b (18 °C), is applied to the work 104 and the work fixing surface 102 from the liquid supply port 107. Thus, the fixing agents 105a, 105b are remelted and the work 104 is removed from the work fixing table 101.

### (Seventh embodiment)

Next, the seventh embodiment of the invention is explained. The seventh embodiment is characterized in that the two sides of the work 104 made of a thin metal sheet are machined while being fixed on the two work fixing tables 101 and 200 by fixing agents of different melting points, respectively.

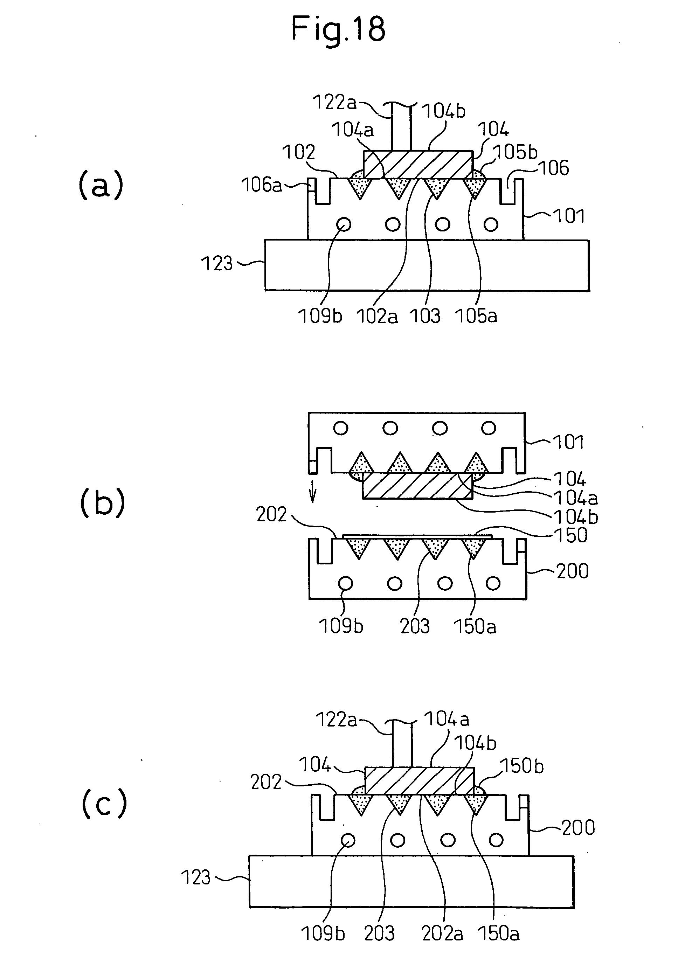

The process of machining the work 104 according to the seventh embodiment of the invention is explained below with reference to Fig. 18. The parts shared by the machining process according to the third embodiment are not shown in the drawings and are described in a simple fashion using the same reference numerals.

According to this seventh embodiment, the work 104 is formed of an aluminum thin sheet of a material JIS-A1050 and having the size of 70 mm by 40 mm with a thickness of 2 mm. Both the fixing tables 101, 200 are made of JIS-S50C as first and second fixing tables, respectively, each of which is a parallelepiped having the size of 100 mm by 100 mm with a thickness of 15 mm, and the work fixing surfaces 102, 202 are formed with the grid-like grooves 103 (having the opening width of 3 mm, the depth of 0.5 mm and the groove interval of 5 mm) similar to the first embodiment.

A plurality of sheathed heaters 109b are buried in the work fixing tables 101, 200 according to the seventh embodiment of the invention. Without using any other heating means such as the hot plate 109, the silicon rubber heater 109a or hot water, therefore, the work fixing tables 101, 200 with the work 104 mounted thereon can be heated in situ without being moved.

Fig. 18(a) shows the first machining process for grinding the second surface 104b of the work 104. To execute the first machining process, the work 104 is fixed on the work fixing table 101 in substantially the same manner as in the third embodiment described above. Therefore, the seventh embodiment is explained below only briefly with reference to Figs. 13(a) to 13(c).

First, the first fixing table 101, on which the work 104 is mounted with the first surface 104a in contact with the work fixing surface 102, is heated to a temperature (70 °C) higher than the melting point (first melting point 51 °C) of the paraffin of the first fixing agent with the sheathed heaters 109b buried in the first fixing table 101.

Once the work 104 reaches a predetermined temperature (70 °C), the first surface 104a of the work 104 in contact with the work fixing surface 102 is coated with the first fixing agent 105, and the work 104 is placed on the reheated work fixing surface 102. Then, the first fixing agent 105 is completely liquefied, so that the first fixing agent 105 at the portion in direct contact between the first surface 104a of the work 104 and the work contact surface 102a flows into the grooves 103b (first heating step).

As described above, all the grooves 103b immediately under the work 104 are filled with the first fixing agent 105a, and the remaining first fixing agent 105b is deposited around the ends of the work 104. Then, the heating operation with the sheathed heaters 109b is stopped, and the work 104 and the first fixing table 101 are cooled. For this cooling operation, water 107a, for example, at room temperature lower than the first melting point (51 °C) of the first fixing agent is supplied to the coolant path 106 formed on the outer periphery of the work fixing table 101 while being discharged through the exhaust port 106a (first cooling step).

As a result, the first fixing agents 105a, 105b are coagulated, and the work 104 is fixed on the first fixing table 101. Under this condition, the first fixing table 101 is fixed on the machine tool table 123 of electromagnetic chuck type and the machining process is executed by cutting the second surface 104b in opposed relation to the first surface 104a of the work 104 with an end mill cutter 122a (Fig. 18(a)).

In the process, the second fixing table 200, i.e. the other fixing table is heated beforehand to a temperature (90 °C) higher than the melting point (second melting point, 75 °C) of the second fixing agent 150. Then, the second fixing agent 150 is coated and melted on the work fixing surface 202 of the second fixing table 200 heated.

The work 104 is held between the first fixing table 101 and the second fixing table 200 in such a manner that the work fixing surface 202 of the second fixing table 200 with the second fixing agent 150 melted thereon and the second surface 104b of the work 104 machined are in contact with each other (second heating step).

In the process, the first fixing table 101 after machining is not heated, and the work 104 is fixed on the first surface 104a by the coagulated first fixing agent 105a. As shown in Fig. 18(b), therefore, the first fixing table 101 is inverted with the work 104 fixed thereon and placed on the second work fixing surface 202 of the second fixing table 200 located thereunder.

In the process, due to the contact between the work fixing surface 202 of the second fixing table 200 and the second surface 104b of the work 104 machined, the second fixing agent 150 in molten state at the direct contact portion between the second surface 104b of the work 104 and the work contact surface 202a of the second fixing table 200 flows into the grooves 203 formed on the work fixing surface 202 of the second work fixing table 200 as the first fixing table 101 functions as a weight.

All the grooves 203 immediately under the second surface 104b of the work 104 are filled with the second fixing agent 150a, and the remaining second fixing agent 150b is deposited around the ends of the work 104. Then, the heating operation of the sheathed heater 109b is stopped.

As described above, with the work 104 held between the first fixing table 101 and the second fixing table 200, the first fixing table 101 is heated to an intermediate temperature (60 °C) between the first melting point (51 °C) of the first fixing agent 105 and the second melting point (75 °C) of the second fixing agent 150. In the process, the second fixing table 200 is not heated, and decreased to the same intermediate temperature as the first fixing table 101 by heat conduction through the work 104 from a temperature (90 °C) higher than the melting point of the second fixing agent 150 and intended to melt the second fixing agent 150.

Once the work 104 reaches the intermediate temperature (60 °C), the second fixing agent 150a filled in the groove 103 between the second surface 104b and the second fixing table 200 is cooled to a temperature lower than the melting point (75 °C) and coagulated, so that the second surface 104b and the second fixing table 200 are fixed to each other.

The first fixing agent 105a filled in the groove 103 between the first surface 104a and the first fixing table 101, on the other hand, is melted into liquid form when the work 104 is heated to an intermediate temperature (60 °C) higher than the melting point (51 °C) of the first fixing agent 105a. With the second surface 104b and the second fixing table 200 fixed to each other, therefore, the first surface 104a and the first fixing table 101 can be easily separated from each other (fusion/coagulation step).

After removing the first fixing table 101 from the work 104, the second fixing table 200 is not heated, and further the second fixing table 200 and the work 104 fixed thereon are cooled. The second fixing table 200 is fixed on the machine tool table 123 of electromagnetic chuck type and the first surface 104a of the work 104 is machined with an end mill cutter 122a as a machining operation (Fig. 18(c)).

After machining the first surface 104a, the work 104 is washed off from the second fixing table 200 by applying hot water 107b higher in temperature than the melting point (75 °C) of the second fixing agent 150 to the work 104 and the second fixing table 200 and thereby melting the second fixing agent 150a between the second surface 104b and the second fixing table 200 (remelting step).

In this way, the first surface 104a of the work 104 and the second surface 104b thereof in opposed relation to the first surface 104a can be machined sequentially while fixing the first fixing table 101 and the second fixing table 200 thereto by the first fixing agent 105 and the second fixing agent 150, respectively, having different melting points. Thus, the parallelism of the work after machining can be improved without any displacement between each fixing table and the work 104.

### (Other embodiments)

In each embodiment described above, the work 104 is not limited to sapphire, quartz, glass or metal, but may be ceramic or resin. Also, the machining method is not limited to the surface grinding, surface polishing or milling, but may include cutting, boring or drilling with equal effect. Further, the material of the fixing tables 101, 200 are not limited to steel (JIS-S50C), but other materials such as ferrite stainless steel attracted by a magnet and alumina can be appropriately selected in accordance with the work and the machining process.

While the invention has been described by reference to specific embodiments chosen for the purposes of illustration, it should be apparent that numerous modifications could be made thereto, by those skilled in the art, without departing from the basic concept and scope of the invention.

## Claims

1. A fusion/coagulation work fixing agent to fix a work utilizing the fusion and coagulation of the agent itself,
wherein a difference between a fusion start temperature and a fusion end temperature is not more than 2 °C.

2. The fusion/coagulation work fixing agent according to claim 1,
wherein the difference between the fusion start temperature and the fusion end temperature is not more than 1 °C.

3. The fusion/coagulation work fixing agent according to claim 1 or 2, comprising paraffin or polyethylene glycol.

4. The fusion/coagulation work fixing agent according to any one of claims 1 to 3,
wherein the fusion start temperature and the fusion end temperature are included in range of 18 °C to 30 °C.

5. A machining method comprising steps of:
melting and bringing the fusion/coagulation work fixing agent (3) described in any one of claims 1 to 4 into contact with a work (1) on a fixing table (2);
cooling and coagulating the work fixing agent (3) thereby establishing a condition in which the work (1) is fixed on the fixing table (2);
machining the work (1) under the condition;
heating and melting the work fixing agent (3) after completion of the machining thereby to remove the work (1) from the fixing table (2).

6. A work fixing table (101, 200) for fixing a work (104) by a fixing agent (105, 150) adapted to be melted and coagulated, comprising a work fixing surface (102, 202) on which the work is placed,
wherein at least a groove (103, 103a, 103b, 130, 131, 131a, 203) through which the fixing agent in molten state can flow is formed on the work fixing surface.

7. The work fixing table according to claim 6,
wherein a range in which at least the groove is formed on the work fixing surface is larger than the work and smaller than the work fixing surface.

8. The work fixing table according to claim 6 or 7,
wherein depth of the groove from the work fixing surface progressively increases in a direction in which the groove is formed.

9. The work fixing table according to claim 6 or 7,
wherein the grooves are formed in radiations on the work fixing surface.

10. The work fixing table according to claim 9,
wherein depth of the grooves from the work fixing surface progressively increases toward a center (132) of the radiations.

11. A work fixing method comprising steps of:
melting the fixing agent by heating the work fixing surface to a temperature higher than a melting point of the fixing agent by a heating means (109, 109a, 109b) for heating the work fixing table as described in any one of claims 6 to 10;
pouring the molten fixing agent into the groove and bringing the work and the molten fixing agent (105a, 105b, 150a, 150b) in the groove into close contact with each other; and
cooling the work fixing surface to a temperature lower than the melting point of the fixing agent thereby to coagulate the fixing agent and fix the work on the work fixing surface.

12. The work fixing method according to claim 11,
wherein the heating means is a sheet heater (109, 109a) in close contact with the work fixing table or a heater (109b) buried in the work fixing table.

13. A work fixing method comprising steps of:
keeping the work fixing surface of the work fixing table as described in any one of claims 6 to 10 at normal temperature;
melting the fixing agent of a material having the melting point between a normal temperature and a freezing temperature;
pouring the molten fixing agent into the groove formed on the work fixing surface kept at the normal temperature; and
coagulating the fixing agent by cooling the work fixing surface to a temperature lower than the melting point of the fixing agent thereby to fix the work on the work fixing surface.

14. The work fixing method according to any one of claims 11 to 13,
wherein the molten fixing agent is poured into the groove by an air blow (108a).

15. The work fixing method according to any one of claims 11 to 14,
wherein a cooling liquid path (106) in which a cooling liquid (107a) flows is formed on an outer periphery of the work fixing surface, and an cooling liquid lower in temperature than the melting point is supplied to the cooling liquid path thereby to coagulate the molten fixing agent.

16. The work fixing method according to any one of claims 11 to 14,
wherein the cooling liquid (107a) lower in temperature than the melting point is applied to at least one of the work fixing table and the work thereby to coagulate the molten fixing agent.

17. The work fixing method according to any one of claims 11 to 14,
wherein a metal case (113) containing a liquid (114) lower in temperature than the melting point is placed on the work thereby to cool the work and coagulate the molten fixing agent.

18. The work fixing method according to any one of claims 11 to 17,
wherein the work fixed on the work fixing surface by the coagulated fixing agent is machined, and a liquid (107b) higher in temperature than the melting point is applied to at least one of the work fixing table and the work thereby to melt the coagulated fixing agent and remove the work from the work fixing table.

19. A machining method comprising steps of:
fixing the work on the work fixing table by the work fixing method as described in claim 17;
machining and removing the work from the work fixing table; and
removing the machining-caused distortion by annealing the work.

20. A machining method using the work fixing tables described in any one of claims 6 to 10 as a first fixing table (101) and a second fixing table (200);
the method comprising:
a first heating step including the substeps of heating a work fixing surface (102) of the first fixing table (101) to a temperature higher than a first melting point, and pouring a first fixing agent (105) having the first melting point into grooves (103, 103a, 103b) of the first fixing table thereby to bond a first surface (104a) of the work and the work fixing surface of the first fixing table to each other;
a first cooling step including the substeps of cooling the work to a temperature lower than the first melting point thereby to fix the first surface on the first fixing table and machining a second surface (104b) in opposed relation to the first surface;
a second heating step including the substeps of heating a work fixing surface (202) of the second fixing table to a temperature equal to or higher than a second melting point higher than the first melting point, pouring a second fixing agent (150) having the second melting point into grooves (203) of the second fixing table, thereby bonding the second surface of the work and the work fixing surface of the second fixing table to each other while keeping the first surface of the work and the first fixing table fixed to each other, and holding the work between the first fixing table and the second fixing table;
a fusion/coagulation step including the substeps of adjusting the work to a temperature between the first melting point and the second melting point, separating the first surface and the first fixing table from each other while keeping the second surface and the second fixing table fixed to each other, and machining the first surface; and
a remelting step including the substeps of increasing temperature of the work to higher than the second melting point thereby to melt the second fixing agent, and removing the second surface from the second fixing table.

21. The machining method according to claim 20,
wherein the remelting step further includes the substep of applying a liquid (107b) higher in temperature than the second melting point to at least one of the second fixing table and the work thereby to melt the second fixing agent.
